Europäisches Patentamt

European Patent Office

Office européen des brevets

(11) Publication number: **0 458 308 A2**

# (12) EUROPEAN PATENT APPLICATION

(21) Application number: **91108288.1**

(51) Int. Cl.⁵: **G06K 9/44**

(22) Date of filing: **22.05.91**

(30) Priority: **22.05.90 JP 131875/90**

(43) Date of publication of application:
**27.11.91 Bulletin 91/48**

(84) Designated Contracting States:
**DE FR GB**

(71) Applicant: **FUJI PHOTO FILM CO., LTD.**
**210 Nakanuma Minami Ashigara-shi**
**Kanagawa(JP)**

(72) Inventor: **Koyama, Hiroo**
**798, Miyanodai, Kaisei-Machi**
**Ashigara-Kamigun, Kanagawa(JP)**

(74) Representative: **Patentanwälte Grünecker,**
**Kinkeldey, Stockmair & Partner**
**Maximilianstrasse 58**
**W-8000 München 22(DE)**

(54) **Method of eliminating noise.**

(57) In accordance with this invention, the operations of thinning down and fatting up a given pixel are performed on binary image data read by a scanner or the like and digitized, whereby any protrusion noises can be eliminated. To eliminate any recess noises including white blanking, the thinning-down operation is performed again. That is, by thinning down an original image by a preset amount and then fatting it up by double the preset amount, and further, thinning down the fatted-up image by the preset amount, any recess noises can also be eliminated.

FIG.1

## BACKGROUND OF THE INVENTION

This invention relates to a noise elimination method for eliminating any noises contained in a binary-coded image read by an input means such as a scanner and digitized.

Japanese Patent Laid-open (KOKAI) No. 34385/1974 discloses a device (hereinafter referred to as "the first device") for eliminating any noises contained in an image. In this first device, a given pixel and peripheral pixels thereof are read, and a logical operation is performed on the given pixel and the peripheral pixels, thereby making a judgment as to whether that a pixel is in a noise condition or not. That is, the first device is so designed that two-dimensional local areas are successively cut out of a two-dimensional binary contrast pattern to be examined and, by performing a spatial logical operation on the logical condition of the central pixel of each local area and on the logical condition of the peripheral region, any flaws (noises) can be extracted.

Japanese Patent Publication (KOKOKU) No. 9389/1990 discloses a device (hereinafter referred to as "the second device") in which a noise judgment operation such as performed in the first device is performed with respect to each line to eliminate any noises (wherein a "noise" means the condition of "1",) contained therein. That is, the second device is so designed that the object image is stored line by line in a memory. The data of each line is shifted to the right and stored in the memory and, further, the data of each line is shifted to the left and then stored in the memory, eminimating any microscopic isolated points by performing a logical operation on the data of each line.

In the first device, the judgment as to whether a given pixel is in a noise or not is made on the basis of a logical condition between the given pixel and peripheral pixels thereof, so that it takes long to effect noise elimination with respect to the entire image, and the above noise judgment can only be made in terms of pixels. Therefore, the first device cannot eliminate linear noises.

In the second device, the noise judgment is made with respect to a given line on the basis of the data one lines above and below the given line, so that, while it can operate at a speed higher than that of the first device, its use is restricted to the elimination of microscopic isolated points. Furthermore, the second device requires a rather complicated control system. In addition, although the noise judgment is made in terms of lines, it cannot be denied that the individual units are pixels, so that, when realized in a software form, the second device is not suitable for practical use due to the long operational time involved.

## SUMMARY OF THE INVENTION

This invention has been made in view of the above problems. It is an object of this invention to provide a noise elimination method in which a noise eliminating operation is not performed in terms of pixels or lines but in terms of an area, without using any special device for performing a logical operation on a given pixel and peripheral pixels thereof, and which makes it possible to eliminate noise covering more than one pixel.

According to one aspect of this invention, for achieving the objects described above, there is provided a noise elimination method of the type in which any noises are eliminated from a binary-coded image read by an input means and digitized, the method comprising the steps of thinning down and then fatting up the binary-coded image, thereby obtaining image data from which any noises have been eliminated. To eliminate any recess noises (including white blanking) from the original image, the image data is thinned down by a preset amount and then fatted up by double the preset amount. Afterwards, it is thinned down again by the preset amount.

The nature, principle and utility of the invention will become more apparent from the following detailed description when read in conjunction with the accompanying drawings.

## BRIEF DESCRIPTION OF THE DRAWINGS

In the accompanying drawings:

FIG.1 is a block diagram showing an example of the system for carrying out the method of this invention;

FIG.2 is a flow chart showing an example of the operation of this invention;

FIG.3 is a diagram for illustrating the operation of this invention;

FIG.4 is a flow chart illustrating an example of the thinning-down operation performed in this invention;

FIG.5 is a flow chart showing another embodiment of this invention;

FIG.6 is a diagram for illustrating the operation of the embodiment in FIG.5;

FIG.7 is a diagram showing a concrete example of this invention; and

FIGs.8A and 8B are diagrams for illustrating the effects of this invention.

## DESCRIPTION OF THE PREFERRED EMBODIMENTS

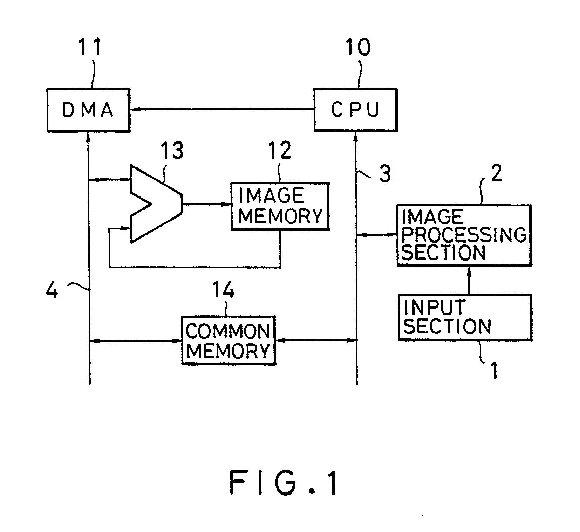

FIG.1 shows the system configuration for the method of this present invention. Original image data read by an input section 1, which cosists of a scanner or the like, is processed at an image processing section 2, and is controlled by a CPU 10 through a bus line 3. Further, the CPU 10 controls a DMA 11. A common memory 14 is connected between a bus line 4 connected to the DMA 11 and the bus line 3 connected to the CPU 10. An image memory (a work memory) 12 is connected to the bus line 4 through the intermediation of a logical operation circuit 13. Further, operational instructions by an operator or the like are entered at the input section 1.

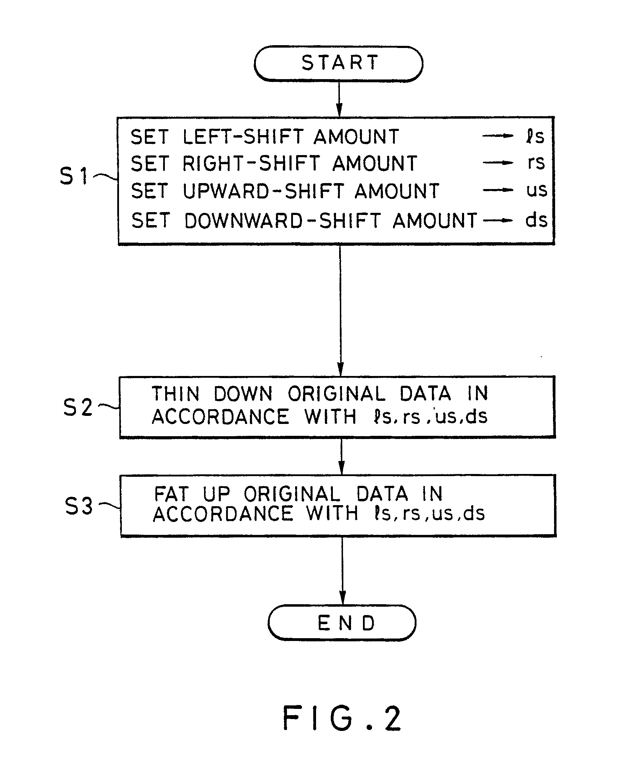

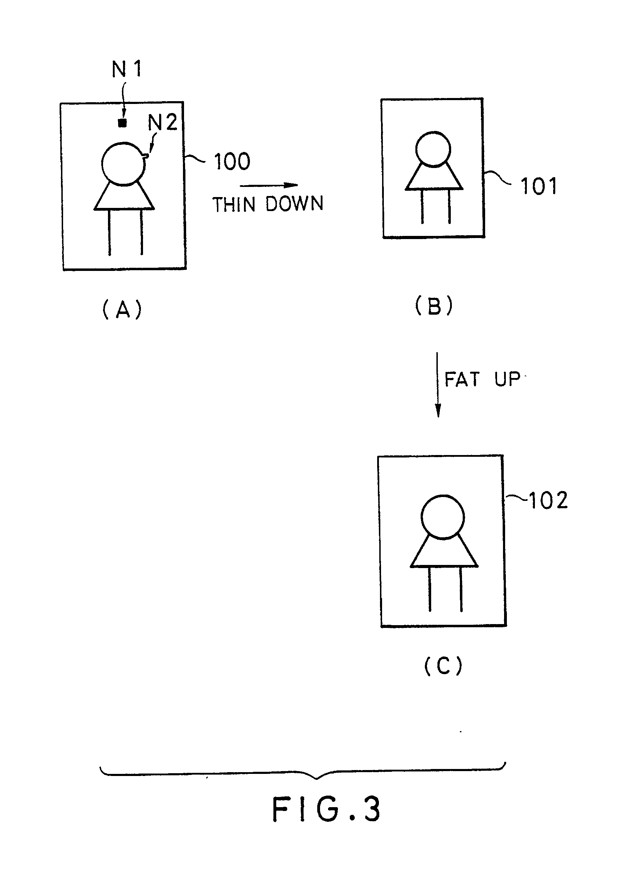

Operation of the method of this invention will be described with reference to the flow chart of FIG.2. First, the left-shift amount $ls$, the right-shift amount rs, the upward-shift amount us and the downward-shift amount ds are respectively set by the input section 1 (Step S1) . These values $ls$ - ds can be set in terms of pixels. Further, the input section 1 reads an original image and stores the binary-coded image data processed in the image processing section 2 in the image memory 12 through the CPU 10, whereby original image data 100 as shown in (A) of FIG.3 is obtained. In this example, the original image data 100 contains noises N1 and N2. The original image data 100 stored in the image memory 12 is thinned down in accordance with the shift amounts $ls$ - ds set in the Step S1 (Step S2), whereby a thinned-down image 101 as shown in (B) of FIG.3 is obtained. In this case, any isolated noises and protrusion noises, for example, noises N1 and N2 in the image shown in (A) of FIG .3 disappear. The thinned-down image 101 thus obtained is fatted up, as shown in (C) of FIG. 3, in accordance with the shift amounts set in the Step S1 (Step S3) , thereby obtaining image data 102 from which any noises have been eliminated and which have the same size as the original image data 100. This method is effective in eliminating the isolated-point noises when fatting up or shadowing a character. No particular problems are involved if some white blanking and so on remains. The operations of thinning down and fatting up the image data are performed in accordance with the methods disclosed in Japanese Patent Application No.315678/1988 or No.68975/1989 filed by the present applicant. These methods will be described below.

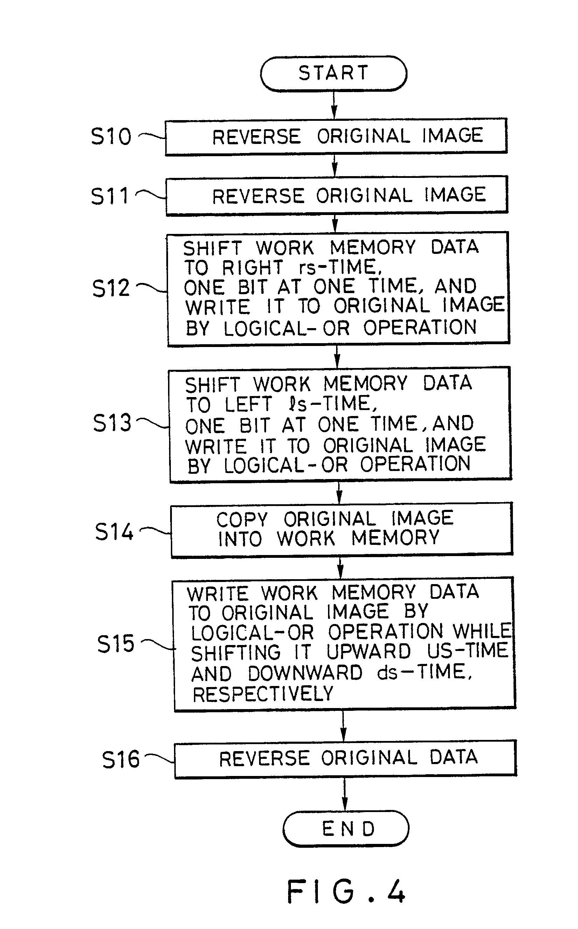

Next, the operation of thinning down an image will be described with reference to the flow chart of FIG.4.

First, the original image data is reversed (Step S10) , thereby obtaining an area equivalent to the original image data as work memory (Step S11). Then, the data of the work memory is shifted to the right one bit at one time, and is written to the original image data by an rs-time logical-OR operation, as preset in the Step S1 (Step S12). Likewise, the data of the work memory is shifted to the left one bit at one time, and is written to the original image data by an $ls$-time logical-OR operation, as preset in the Step S1 (Step S13). Afterwards, the original image is copied into the work memory (Step S14) and, as in the above case, is written to the original image data by a logical-OR operation while shifting the data of the work memory upward us-time and downward us and ds-time, respectively (Step S15). Afterwards, the original image is reversed (Step S16).

The operation of fatting up the image data is substantially the same as that shown in FIG.4, except for the fact that the Steps S10 and S16 are not needed.

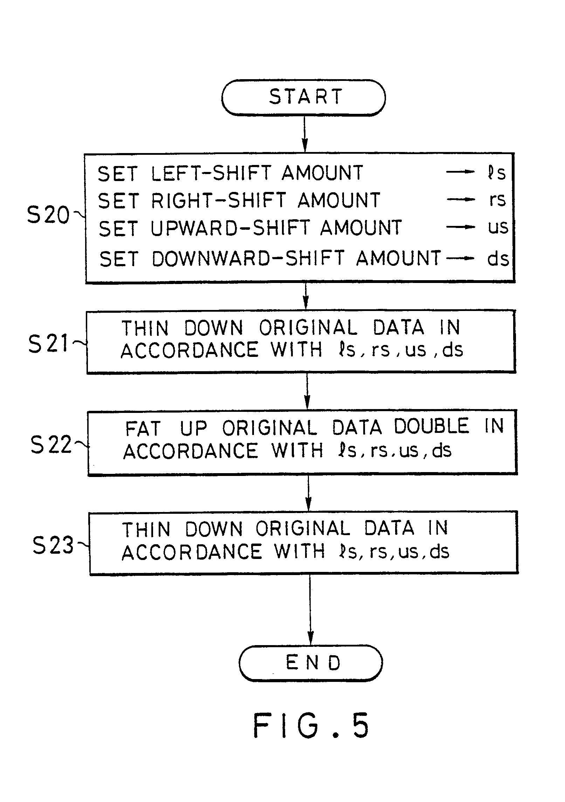

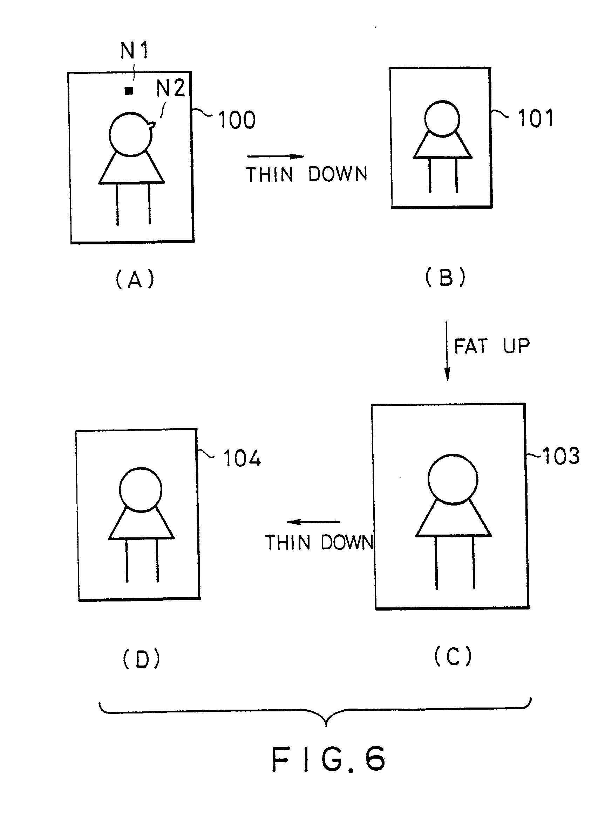

The above embodiment has been described with reference, in particular, to a case where any isolated noises and protrusion noises are eliminated from a character. When any recess noises (including white blanking) are to be eliminated from an image or the like, the operation shown in FIG.5 is carried out. This operation will be described with reference to FIG.6.

First, as in the above case, the shift amounts $ls$, rs, us and ds for the left, right, upward and downward shifts are respectively set by the input section 1 (Step S20). An original image 100 ((A) in FIG. 6) of the original read and entered is thinned down through shifting by the shift amounts $ls$, rs, us and ds, as shown in (B) in FIG.6 (Step S21). At this stage, any isolated noises and protruding noises as mentioned above are eliminated. Then, the image 101 shown in (B) in FIG.6 is fatted up through shifting by double the shift amounts of $ls$, rs, us and ds (Step S22). Further, as shown in (D) in FIG.6, the image 103 thus obtained is thinned down through shifting by the shift amounts of $ls$, rs, us and ds (Step S23), thereby obtaining an image 104 which has the same size as the original image 100 and from which any recess noises have been eliminated.

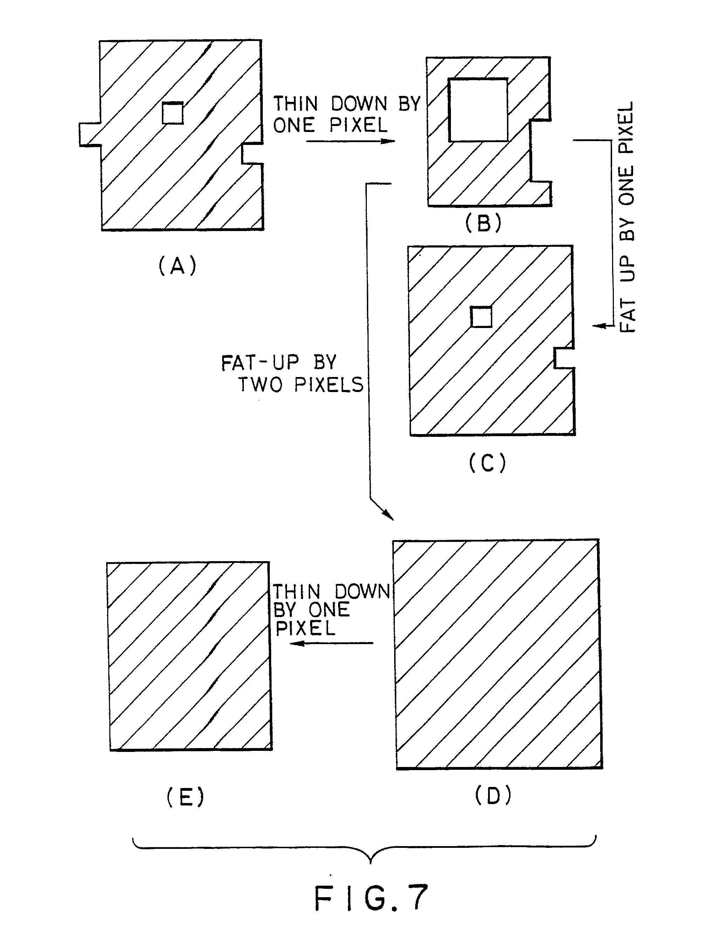

A concrete example of the system of this invention will be illustrated with reference to FIG.7 while comparing it with the above first and second embodiments. By thinning down the image of (A) in FIG.7 by one pixel, an image as shown in (B) in FIG.7 is obtained. When this is fatted up by one pixel, an image as shown in (C) in FIG.7 is obtained. Exclusively any protrusion noises have been eliminated from the image thus obtained. Further, by fatting up the image shown in (B) in FIG.7 by two pixels, an image as shown in (D) in FIG.7 is obtained, and, when this is thinned down by one pixel, an image as shown in (E) in FIG.7 is obtained. Any protrusion and recess noises have been eliminated from this image.

While in the above example the shifting operation for thinning down or fatting up the image are effected one bit at one time to the right and left and upwards and downwards, a combination of right- and upward-shifts or a combination of left- and downward-shifts may also be adopted. In that case, noise elimination can be effected with respect to a single pixel. Further, by shifting two bits or more, noise elimination can be performed with respecrt to 2 * 2 pixels or more

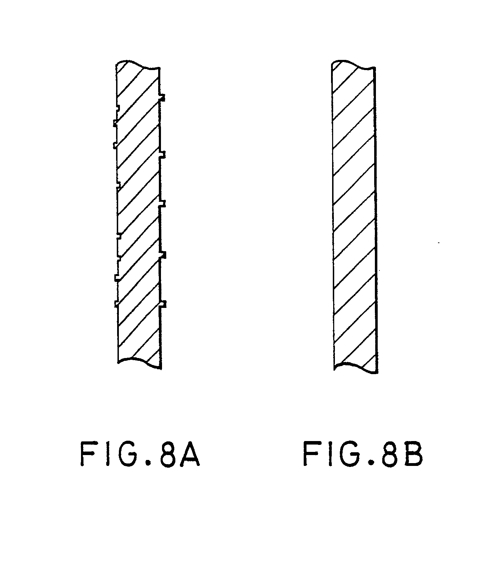

As described above, the method of this invention makes it possible to effect noise elimination at high speed, not in terms of pixels or lines, and without using any special device. Further, with the method of this invention, noise elimination can be effected with respect to 2 * 2 pixels or more instead of a single pixel. FIGs.8A and 8B show the effects of this invention. Noise elimination is effected for the character line shown in FIG.8A in the manner shown in FIG.8B.

It should be understood that many modifications and adaptations of the invention will become apparent to those skilled in the art and it is intended to encompass such obvious modifications and changes in the scope of the claims appended hereto.

## Claims

1. A noise elimination method of the type which eliminates any noises contained in a binary-coded image read by an input means and digitized, said method comprising the steps of thinning down and then fatting up said binary-coded image, whereby image data from which any noises have been eliminated is obtained.

2. A noise elimination method as claimed in Claim 1 further including the step of setting left-shift, right-shift, upward-shift and downward-shift amounts thereby to thin down or fat up said binary-coded image in accordance with the amounts.

3. A noise elimination method of the type which eliminates any noises contained in a binary-coded image read and by an input means and digitized, said method comprising the steps of: thinning down and then fatting up said binary-coded image; and thinning down said binary-coded image again; whereby image data from which any noises have been eliminated is obtained.

4. A noise elimination method as claimed in Claim 2 further including the step of setting left-shift, right-shift, upward-shift and downward-shift amounts thereby to thin down or fat up said binary-coded image in accordance with the amounts.

FIG.1

FIG.2

FIG.3

START

S10 — REVERSE ORIGINAL IMAGE

S11 — REVERSE ORIGINAL IMAGE

S12 — SHIFT WORK MEMORY DATA TO RIGHT rs-TIME, ONE BIT AT ONE TIME, AND WRITE IT TO ORIGINAL IMAGE BY LOGICAL-OR OPERATION

S13 — SHIFT WORK MEMORY DATA TO LEFT $\ell$s-TIME, ONE BIT AT ONE TIME, AND WRITE IT TO ORIGINAL IMAGE BY LOGICAL-OR OPERATION

S14 — COPY ORIGINAL IMAGE INTO WORK MEMORY

S15 — WRITE WORK MEMORY DATA TO ORIGINAL IMAGE BY LOGICAL-OR OPERATION WHILE SHIFTING IT UPWARD US-TIME AND DOWNWARD ds-TIME, RESPECTIVELY

S16 — REVERSE ORIGINAL DATA

END

F I G . 4

START

S20 —
SET LEFT–SHIFT AMOUNT ⟶ $\ell$s
SET RIGHT–SHIFT AMOUNT ⟶ rs
SET UPWARD–SHIFT AMOUNT ⟶ us
SET DOWNWARD–SHIFT AMOUNT ⟶ ds

S21 —
THIN DOWN ORIGINAL DATA IN
ACCORDANCE WITH $\ell$s, rs, us, ds

S22 —
FAT UP ORIGINAL DATA DOUBLE IN
ACCORDANCE WITH $\ell$s, rs, us, ds

S23 —
THIN DOWN ORIGINAL DATA IN
ACCORDANCE WITH $\ell$s, rs, us, ds

E N D

FIG.5

FIG.6

THIN DOWN BY
ONE PIXEL

FAT UP BY ONE PIXEL

(A)

(B)

FAT-UP BY
TWO PIXELS

(C)

THIN DOWN
BY ONE
PIXEL

(E)

(D)

F I G.7

FIG.8A          FIG.8B